## Europäisches Patentamt
## European Patent Office
## Office européen des brevets

(19)

(11) Veröffentlichungsnummer : **0 153 748**
**B1**

(12)

# EUROPÄISCHE PATENTSCHRIFT

(45) Veröffentlichungstag der Patentschrift :
26.04.89

(21) Anmeldenummer : 85102231.9

(22) Anmeldetag : 28.02.85

(51) Int. Cl.⁴ : **E 04 C  2/04**, E 04 C  2/52,
**B 32 B  3/30**

(54) Plattenförmiges Verbundelement.

(30) Priorität : 29.02.84 DE 3407443

(43) Veröffentlichungstag der Anmeldung :
04.09.85 Patentblatt 85/36

(45) Bekanntmachung des Hinweises auf die Patenterteilung : 26.04.89 Patentblatt 89/17

(84) Benannte Vertragsstaaten :
DE FR IT NL

(56) Entgegenhaltungen :
CH-A-  456 902
DE-A- 3 104 608
DE-C-  22 666

(73) Patentinhaber : Buchtal GmbH Keramische Betriebe
D-8472 Schwarzenfeld/Opf. (DE)

(72) Erfinder : Bard, Martin, Dipl.-Ing.
Seminargasse 26
D-8450 Amberg (DE)

(74) Vertreter : Betzler, Eduard, Dipl.-Phys. et al
Postfach 70 02 09 Plinganserstrasse 18a
D-8000 München 70 (DE)

## Beschreibung

Die Erfindung bezieht sich auf ein plattenförmiges Verbundelement, bei dem auf einer keramischen, als Tragplatte dienenden Platte eine weitere keramische Platte als Sichtplatte aufgeklebt ist.

Ein solches plattenförmiges Verbundelement ist aus der DE-C-22 666 bekannt. Nach dieser Druckschrift werden aus gutem porösen Ton hergestellte Platten nach dem Trocknen einseitig mit Glasur überzogen und dann paarweise so mit der ebenen glasierten Fläche aufeinander gelegt, daß eine Doppelplatte entsteht, deren Einzelplatten gegeneinander versetzt sind. Die Doppelplatten werden gebrannt, wobei die Einzelplatten durch die Glasur miteinander verbunden werden. Die derart gebildete Platte dient dann zur Verkleidung von Mauerwerk.

Schließlich sind keramische Platten bekannt (CH-A-456 902), die auf ihren einander zugekehrten Rückseiten Reliefierungen aufweisen. Allerdings handelt es sich hierbei um Spaltplatten, die herstellungsbedingt mit stegartigen oder rippenartigen Reliefierungen an den Rückseiten versehen sind, um die Platten während des Brennprozesses auf Abstand zueinander zu halten. Diese Platten werden aber dann in Einzelplatten getrennt und als Einzelplatten auch auf Böden oder an Wänden verlegt.

Aufgabe der Erfindung ist es, ein plattenförmiges Verbundelement der angegebenen Art so zu verbessern, daß der Zusammenhalt der beiden Einzelplatten wesentlich verstärkt und damit die Festigkeit des Verbundelementes erheblich verbessert wird.

Zur Lösung des der Erfindung zugrundeliegenden Problems wird vorgeschlagen, daß die Platten jeweils auf ihren Rückseiten mit einer Parallelreliefierung versehen und mit ihren reliefierten Rückseiten miteinander verklebt sind.

Da die Wandstärke eines derartigen Verbundelementes der normalen Wandstärke von Schindeln oder üblichen keramischen Platten entsprechen kann, lassen sich als Tragplatte und auf ihr aufgelegte Sichtplatte außerordentlich dünne Platten verwenden. Da Platten mit einer Reliefierung auf der Rückseite verwendet werden, lassen sich die Platten derart miteinander verbinden und verkleben, daß die Reliefierungen, bei denen es sich im allgemeinen um geradlinig durchgehende Rillen und Stege handelt, ineinander greifen, so daß dadurch der feste Zusammenhalt der Platten und damit des Verbundelementes wesentlich verstärkt wird. Die Verbindung ist nämlich formschlüssig.

Man kann in Weiterbildung der Erfindung die Platten aber auch so aneinanderfügen, daß die Reliefierung auf den zu verklebenden Flächen senkrecht zueinander steht. Damit wird ein ausgeglichenes Widerstandsmoment des Verbundelementes erreicht.

Es kann aber auch wünschenswert sein, ein solches Verbundelement normal in einem Mörtelbett zu verlegen. Hier ist es dann zweckmäßig, wenn die Tragplatte auf beiden Seiten reliefiert ausgebildet ist. Dies ergibt eine Erhöhung der Verbundfläche zum Mörtelbett. Man kann aber auch noch eine Perforierung der Tragplatte vorsehen, was ebenfalls die Haftung im Mörtelbett wesentlich begünstigt.

Die Anbringung einer Perforierung der Tragplatte führt auch zu einer Gewichtsreduzierung, was bei Verwendung des Verbundelementes als Element zur Herstellung einer vorgehängten und hinterlüfteten Fassade an dafür geeigneten Bauwerken von besonderem Vorteil ist, weil das Gewicht des Verbundelementes entsprechend reduziert ist.

Besonders vorteilhaft ist es, wenn die beiden Platten, aus denen das Verbundelement zusammengesetzt ist, so gegeneinander versetzt sind, daß wenigstens an einer Kante die Tragplatte über die entsprechende Kante der Sichtplatte vorsteht. Die Versetzung läßt sich selbstverständlich auch so gestalten, daß dieser vorstehende Rand an zwei zueinander senkrechten Kanten des Verbundelementes in Erscheinung tritt. In diesen Rändern lassen sich Löcher vorsehen, durch die Befestigungsmittel, beispielsweise Befestigungsschrauben, zur Befestigung des Verbundelementes an z. B. Traglatten hindurchgeführt werden können. Die Befestigungsmittel sind in der endgültig mit den erfindungsgemäßen Verbundelementen belegten Fläche nicht mehr sichtbar, weil die entsprechend nach rückwärts versetzte Tragplatte vor den freistehenden Rand steht und sich über diesen freistehenden Rand der entsprechende Rand der Sichtplatte legt.

Die Oberlappung von Sicht- und Tragplatte läßt sich in Weiterbildung der Erfindung so gestalten, daß eine entsprechend schmale oder breite Fuge entsteht. Diese Fuge kann als gestalterisches Element genutzt werden und durch farbliche Abstimmung der Tragplatte zur Farbe der Sichtplatte bzw. zur Anordnung der Sichtplatten kann man die Gestaltung der Fassade od. dgl. entsprechend unterstützen. Dabei kann es wünschenswert sein, daß der als Fugenteil sichtbare und außerdem zur Befestigung des Verbundelementes dienende Rand der Tragplatte nicht reliefiert ist, d. h. daß dieser Teil im Gegensatz zur übrigen Fläche der Tragplatte glatt verbleibt.

Die Tragplatte selbst braucht nicht aus einer einheitlichen Platte zu bestehen. Es können auch eine oder mehrere Platten kleineren Formats als Tragplatte oder als tragendes Element verwendet werden.

Ober dies kann man dort, wo es wünschenswert erscheint, die Sichtplatte aus Einzelelementen oder Formstücken zusammensetzen, so daß man ein Verbundelement erhält, das den architektonischen Gestaltungsspielraum wesentlich erweitert.

Nach dem Erfindungsprinzip lassen sich nicht nur Platten, sondern alle möglichen vorgefertigten Einheiten herstellen, beispielsweise also auch Eckstücke od. dgl.. Man ist in der Gestaltung und in der Einteilung praktisch völlig frei. Es ist somit erreichbar, daß wegen der entsprechenden Ausgestaltung des erfindungsgemäßen Verbundelementes der Arbeitsaufwand beim Verlegen solcher Verbundelemente entsprechend verringert wird.

Die erfindungsgemäße Ausbildung des Verbundelementes läßt aber auch eine weitere Lösung dergestalt zu, daß das Verbundelement als Flächenheizelement genutzt wird, und zwar durch die Verwendung eines elektrischen Widerstandsklebers oder eines keramischen elektrischen Widerstandsbindemittels. Dabei wird unter dem Begriff elektrisches Widerstandsbindemittel bzw. elektrischer Widerstandskleber ein Material verstanden, das elektrisch leitfähig, aber so schlecht leitend ist, daß die in dieses Material eingeleitete elektrische Energie in Wärmeenergie umgewandelt wird. Bindemittel bzw. Kleber lassen sich entsprechend kontaktieren und mit einer Stromquelle verbinden.

Es ist noch nicht einmal eine gesonderte Isolierung erforderlich, da bei Verwendung zweier Vollplatten als Trag- und Sichtplatte das dazwischenliegende Bindemittel bzw. der dazwischen befindliche Kleber zwischen zwei isolierenden Keramikplatten sitzt. Der Anschluß kann bei versetzter Anordnung von Tragplatte und Sichtplatte über die vorstehenden Ränder und über die Gesamtheit der Tragplatten erfolgen, wobei ein entsprechender wechselseitiger Anschluß durch entsprechende Kontaktelemente vorgesehen ist.

Die Zeichnung zeigt in

Fig. 1 ein erfindungsgemäßes Verbundelement in Seitenansicht ;

Fig. 2 eine Draufsicht auf ein Verbundelement ;

Fig. 3 eine Seitenansicht eines Verbundelementes ;

Fig. 4 eine Draufsicht auf eine andere Ausführungsform ;

Fig. 5 eine Seitenansicht der Ausführungsform nach Fig. 4 ;

Fig. 6 eine Draufsicht auf ein erfindungsgemäßes Verbundelement mit versetzter Plattenanordnung ;

Fig. 7 eine Draufsicht auf ein Verbundelement mit aus kleineren Platten bzw. Formstücken bestehendes Verbundelement ;

Fig. 8 eine abgeänderte Ausführungsform, bei der die Tragplatte aus mehreren kleineren Stücken besteht ;

Fig. 9 eine schematische Darstellung der Verlegung zweier Verbundelemente ;

Fig. 10 eine schematische Darstellung einer Einzelplatte mit zum wechselseitigen Anschluß vorgesehenen elektrischen Kontaktelementen.

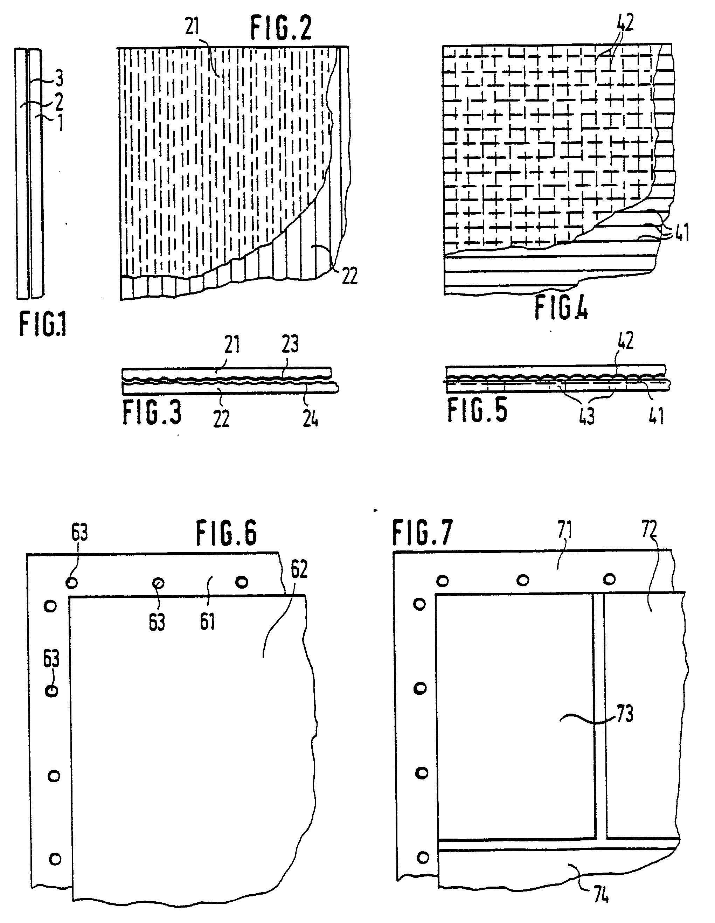

In Fig. 1 erkennt man bei 1 die Sichtplatte und bei 2 die Tragplatte, die mit Hilfe einer Klebmittelschicht 3 miteinander verbunden sind.

Nach Fig. 2 weist sowohl die Sichtplatte 21 als auch die Tragplatte 22 eine Reliefierung auf, die man besonders deutlich aus Fig. 3 erkennt. Die Anordnung ist dabei so getroffen, daß die Reliefierung beider Platten nicht nur parallel zueinander verläuft, sondern ineinander verzahnt ist, wie es bei 23 erkennbar ist. Zwischen den beiden Platten befindet sich eine Klebmittelschicht 24.

In Fig. 4 ist eine Anordnung in Draufsicht schematisch dargestellt, bei der die Reliefierungen 41 der einen Platte senkrecht zur Reliefierung 42 der anderen Platte verlaufen. Fig. 5 zeigt eine Seitenansicht. Man erkennt die Reliefierung 42. Die Reliefierung 41 verläuft hier parallel zur Zeichenebene. Es ist außerdem in der unteren Platte eine Vielzahl von Perforierungen 43 angedeutet.

Fig. 6 zeigt eine Tragplatte 61, auf der versetzt angeordnet eine Sichtplatte 62 über einen nicht gezeichneten Kleber oder ein anderes keramisches Bindemittel verbunden ist. Der vorstehende Rand der Tragplatte 61 weist Befestigungslöcher 63 auf, mit deren Hilfe das Verbundelement aus den Platten 61 und 62 an einem Traggerüst unter Zuhilfenahme von Nägeln und Schrauben befestigt werden kann.

In Fig. 7 erkennt man eine Tragplatte 71, auf der Formstücke 72, 73 und 74 oder entsprechende kleinere Platten angeordnet sind.

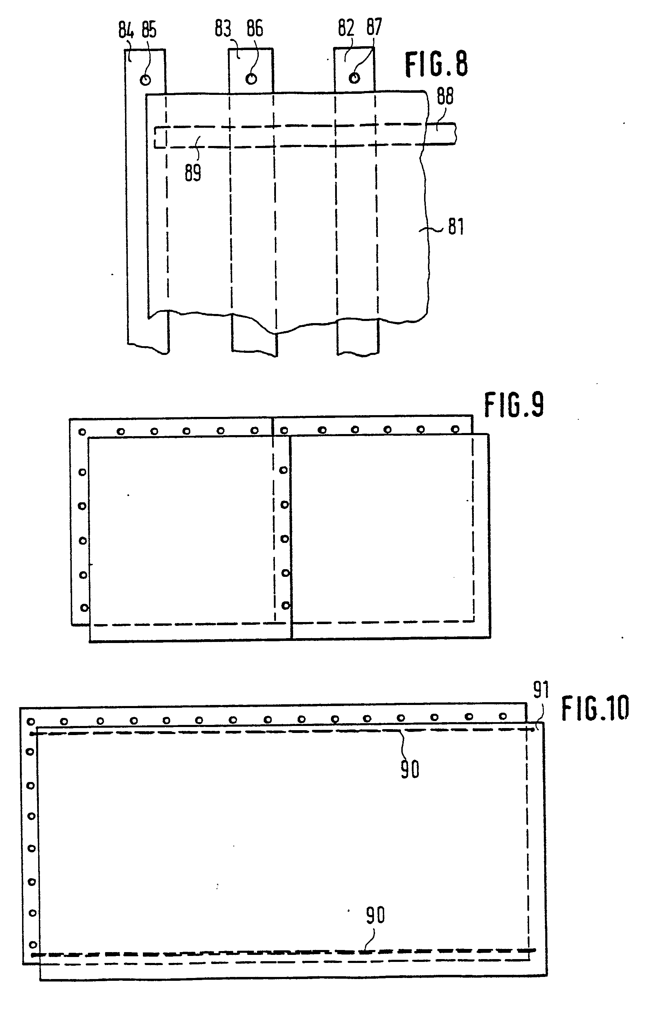

Fig. 8 zeigt eine Sichtplatte 81, die auf einer Tragplatte sitzt, die hier aus verschiedenen Einzelelementen 82, 83 und 84 besteht, die jeweils Befestigungslöcher 85, 86 und 87 aufweisen. Ferner ist erkennbar eine Kontaktierung 88 mit einem Anschlußdraht 89. Die Kontaktierung geht in die Klebmittel- oder Bindemittelschicht über, die auf der Rückseite der Sichtplatte 81 befestigt ist. Man erhält somit ein elektrisch aufheizbares Verbundelement.

Fig. 9 zeigt die Verlegung zweier erfindungsgemäßer Verbundelemente, wobei deutlich erkennbar ist, daß hier eine Überlappung stattfindet, ohne daß diese bei fertiggestellter Verkleidung nach außen sichtbar wird.

Fig. 10 zeigt eine andere Lösung einer Verbundplatte als Flächenheizelement in der Draufsicht. Zwei der elektrischen Stromführung dienende Leisten oder Drähte 90 befinden sich gegenüberliegend auf der Rückseite der Sichtplatte respektive der dem Betrachter zugewendeten Seite der Tragplatte, wobei diese Platten mit einem elektrischen Widerstandskleber oder einem elektrischen Widerstandsbindemittel innig miteinander verbunden sind. Kontaktierungspunkte 91 stellen die Anschlußmöglichkeit an eine Stromquelle oder die elektrische Verbindung zwischen mehreren solcher Elemente dar.

**Patentansprüche**

1. Plattenförmiges Verbundelement, bei dem auf einer keramischen, als Tragplatte (2 ; 22 ; 61 ; 71 ; 82, 83, 84) dienenden Platte eine weitere keramische Platte als Sichtplatte (1 ; 21 ; 62 ; 81) aufgeklebt ist, dadurch gekennzeichnet, daß die Platten jeweils auf ihren Rückseiten mit einer Parallelreliefierung (23 ; 41, 42) versehen und mit ihren reliefierten Rückseiten miteinander verklebt sind.

2. Verbundelement nach Anspruch 1, dadurch gekennzeichnet, daß die Dickenabmessung der Tragplatte (2 ; 22 ; 61 ; 71 ; 82, 83, 84) klein gegenüber der Kantenlänge des Verbundelementes ist.

3. Verbundelement nach Anspruch 1 oder 2, dadurch gekennzeichnet, daß die Reliefierung (23 ; 41, 42) der beiden Plattenrückseiten parallel zueinander verläuft.

4. Verbundelement nach Anspruch 1 oder 2, dadurch gekennzeichnet, daß die Reliefierung (23 ; 41, 42) der beiden Plattenrückseiten senkrecht zueinander verläuft.

5. Verbundelement nach einem oder mehreren der vorhergehenden Ansprüche, dadurch gekennzeichnet, daß die Tragplatte (2 ; 22 ; 61 ; 71 ; 82, 83, 84) auf beiden Seiten reliefiert ist.

6. Verbundelement nach einem oder mehreren der vorhergehenden Ansprüche, dadurch gekennzeichnet, daß die Tragplatte Perforierungen (43) aufweist.

7. Verbundelement nach einem oder mehreren der vorhergehenden Ansprüche, dadurch gekennzeichnet, daß die Tragplatte (2 ; 22 ; 61 ; 71 ; 82, 83, 84) und die Sichtplatte (1 ; 21 ; 62 ; 81) unter Bildung wenigstens eines vorstehenden Randes gegeneinander versetzt miteinander verklebt sind.

8. Verbundelement nach Anspruch 7, dadurch gekennzeichnet, daß in dem vorstehenden Rand oder in den vorstehenden Rändern der Tragplatte (61 ; 71 ; 82, 83, 84) Befestigungslöcher (63 ; 85, 86, 87) vorgesehen sind.

9. Verbundelement nach Anspruch 7 oder 8, dadurch gekennzeichnet, daß die Ränder ohne Reliefierung ausgebildet sind.

10. Verbundelement nach einem oder mehreren der vorhergehenden Ansprüche, dadurch gekennzeichnet, daß die Sichtplatte (1 ; 21 ; 62 ; 81) von der Tragplatte (2 ; 22 ; 61 ; 71 ; 82, 83, 84) unterschiedliche Farbgebung aufweist.

11. Verbundelement nach einem oder mehreren der vorhergehenden Ansprüche, dadurch gekennzeichnet, daß die Tragplatte (71 ; 82, 83, 84) aus einer oder mehreren Platten (72, 73, 74 ; 82, 83, 84) kleineren Formats besteht, die den Rand der Sichtplatte (72 ; 81) teilweise überragen.

12. Verbundelement nach einem oder mehreren der vorhergehenden Ansprüche, dadurch gekennzeichnet, daß die Sichtplatte aus mehreren Platten kleineren Formats besteht.

13. Verbundelement nach Anspruch 12, dadurch gekennzeichnet, daß wenigstens eine der Platten kleineren Formats durch ein räumliches Formstück (72, 73, 74) ersetzt ist.

14. Verbundelement nach einem oder mehreren der vorhergehenden Ansprüche, dadurch gekennzeichnet, daß in der Verklebung der beiden Platten (1 ; 21 ; 62 ; 81), (2 ; 22 ; 61 ; 71 ; 82, 83, 84) ein Gewebe, Gewirk, Gestrick oder Vlies aus Metall-, Glas- und/oder Mineralfasern oder -fäden eingebettet ist.

15. Verbundelement nach einem oder mehreren der vorhergehenden Ansprüche, dadurch gekennzeichnet, daß als Klebemittel (3, 24) ein elastischer Kleber verwendet ist.

16. Verbundelement nach einem oder mehreren der vorhergehenden Ansprüche, dadurch gekennzeichnet, daß als Kleber ein elektrischer Widerstandskleber verwendet ist.

17. Verbundelement nach einem oder mehreren der vorhergehenden Ansprüche, dadurch gekennzeichnet, daß Trag- und Sichtplatte (1 ; 21 ; 62 ; 81), (2 ; 22 ; 61 ; 71, 82, 83, 84) durch ein keramisches Bindemittel miteinander verbunden sind.

18. Verbundelement nach Anspruch 17, dadurch gekennzeichnet, daß das keramische Bindemittel ein elektrisches Widerstandsbindemittel ist.

19. Verbundelement nach einem oder mehreren der vorhergehenden Ansprüche, dadurch gekennzeichnet, daß als Material für den elektrischen Widerstandskleber bzw. das elektrische Widerstandsbindemittel ein Material gewählt ist, das bei Beaufschlagung mit elektrischem Strom einen solchen Temperaturgang aufweist, daß die Stromaufnahme des Materials bei zunehmender Erwärmung gegen Null geht.

20. Verbundelement nach Anspruch 19, dadurch gekennzeichnet, daß das elektrische Widerstandsbindemittel bzw. der elektrische Widerstandskleber mit Kontaktierungselementen (91) für den elektrischen Anschluß des Verbundelementes an ein Stromnetz über ein Material innig verbunden ist, das bei Beaufschlagung mit elektrischem Strom einen solchen Temperaturgang aufweist, daß die Stromaufnahme des Materials bei zunehmender Erwärmung gegen Null geht.

**Claims**

1. A tile shaped composite element in which a ceramic tile is glued as the exposed tile (1 ; 21 ; 62 ; 81) on another ceramic tile serving as a base tile (2 ; 22 ; 61 ; 71 ; 82, 83, 84), characterized in that the tiles are each provided on the back with a parallel relief structure (23 ; 41, 42) and glued together back to back.

2. A composite element as in claim 1, characterized in that the thickness of the base tile (2 ; 22 ; 61 ; 71 ; 82, 83, 84) is small compared to the edge length of the composite element.

3. A composite element as in claim 1 or 2, characterized in that the relief structures (23 ; 41 ; 42) of the two tile backs extend parallel to each other.

4. A composite element as in claim 1 or 2, characterized in that the relief structures (23 ; 41, 42) of the two tile backs extend perpendicular to each other.

5. A composite element as in one or more of the above claims, characterized in that the base tile (2 ; 22 ; 61 ; 71 ; 82, 83, 84) has a relief structure on both sides.

6. A composite element as in one or more of the above claims, characterized in that the base tile has perforations (43).

7. A composite element as in one or more of the above claims, characterized in that the base tile (2 ; 22 ; 61 ; 71 ; 82, 83, 84) and the exposed tile (1 ; 21 ; 62 ; 81) are glued together in offset fashion to form at least one protruding edge.

8. A composite element as in claim 7, characterized in that attachment holes (63 ; 85 ; 86, 87) are provided in the protruding edge or edges of the base tile (61 ; 71 ; 82, 83, 84).

9. A composite element as in claim 7 or 8, characterized in that the edges are designed without a relief structure.

10. A composite element as in one or more of the above claims, characterized in that the exposed tile (1 ; 21 ; 62 ; 81) has a different coloring to the base tile (2 ; 22 ; 61 ; 71 ; 82, 83, 84).

11. A composite element as in one or more of the above claims, characterized in that the base tile (71 ; 82, 83, 84) consists of one or more tiles (72, 73, 74 ; 82, 83, 84) of smaller format which partly protrude beyond the edge of the exposed tile (72 ; 81).

12. A composite element as in one or more of the above claims, characterized in that the exposed tile consists of a plurality of tiles of smaller format.

13. A composite element as in claim 12, characterized in that at least one of the tiles of smaller format is raplaced by a three-dimensional formed piece (72, 73, 74).

14. A composite element as in one or more of the above claims, characterized in that a woven, knit or nonwoven fabric consisting of metal, glass and/or mineral fibers or threads is embedded in the gluing of the two tiles (1 ; 21 ; 62 ; 81), (2 ; 22 ; 61 ; 71 ; 82, 83, 84).

15. A composite element as in one or more of the above claims, characterized in that the adhesive (3, 24) used is an elastic adhesive.

16. A composite element as in one or more of the above elements, characterized in that the adhesive used is an electrically resistive adhesive.

17. A composite element as in one or more of the above claims, characterized in that the base and exposed tiles (1 ; 21 ; 62 ; 81), (2 ; 22 ; 61 ; 71, 82, 83, 84) are interconnected by a ceramic binder.

18. A composite element as in claim 17, characterized in that the ceramic binder is an electrically resistive binder.

19. A composite element as in one or more of the above claims, characterized in that the material selected for the electrically resistive adhesive or electrically resistive binder is one that, when subjected to electric current, shows a temperature response such that the current consumption of the material approaches zero as its heating increases.

20. A composite element as in claim 19, characterized in that the electrically resistive binder or electrically resistive adhesive is intimately connected with contacting elements (91) for electric connection of the composite element to an electric network, via a material which, when subjected to electric current, shows a temperature response such that the current consumption of the material approaches zero as its heating increases.

**Revendications**

1. Elément composite en forme de plaque, dans lequel, sur une première plaque céramique, servant de plaque support (2, 22 ; 61 ; 71 ; 82, 83, 84) est collée une deuxième plaque céramique servant de plaque de parement (1 ; 21 ; 62 ; 81), caractérisé en ce que les plaques sont munies, chacune sur sa face arrière, d'un relief formé de lignes parallèles (23 ; 41, 42), et sont collées l'une à l'autre par leurs faces arrière munies d'un relief.

2. Elément composite selon la revendication 1, caractérisé, en ce que la dimension en épaisseur de la plaque support (2 ; 22 ; 61 ; 71 ; 82, 83, 84) est petite par rapport à la longueur des côtés de l'élément composite.

3. Elément composite selon la revendication 1 ou 2, caractérisé en ce que le relief (23 ; 41 ; 42) des deux faces arrière des plaques s'étendent parallèlement entre eux.

4. Elément composite selon la revendication 1 ou 2, caractérisé en ce que les reliefs (23 ; 41, 42) des deux faces arrière des plaques s'étendent perpendiculairement l'un à l'autre.

5. Elément composite selon une ou plusieurs des revendications précédentes, caractérisé en ce que la plaque support (2 ; 22 ; 61 ; 71 ; 82, 83, 84) est munie d'un relief sur les deux faces.

6. Elément composite selon une ou plusieurs des revendications précédentes, caractérisé en ce que la plaque support présente des perforations (43).

7. Elément composite selon une ou plusieurs des revendications précédentes, caractérisé en ce que la plaque support (2 ; 22 ; 61 ; 71 ; 82, 83, 84) et la plaque de parement (1 ; 21 ; 22 ; 81) sont collées l'une à l'autre, dans des dispositions décalées l'une par rapport à l'autre, en formant au moins un bord débordant.

8. Elément composite selon la revendication 7, caractérisé en ce que des trous de fixation (63 ; 85, 86, 87) sont prévus dans le bord débordant ou dans les bords débordants de la plaque support (61 ; 71 ; 82, 83, 84).

9. Elément composite selon la revendication 7 ou 8, caractérisé en ce que les bords sont réalisés sans relief.

10. Elément composite selon une ou plusieurs des revendications précédentes, caractérisé en ce que la plaque de parement (1 ; 21 ; 62 ; 81) présente une coloration différente de celle de la plaque support (2 ; 22 ; 61 ; 71 ; 82, 83, 84).

11. Elément composite selon une ou plusieurs des revendications précédentes, caractérisé en ce que la plaque support (71 ; 82, 83, 84) est composée d'une ou plusieurs plaques (72, 73, 74 ; 82, 83, 84) d'un plus petit format, qui déborde partiellement au-delà du bord de la plaque de parement (72 ; 81).

12. Elément composite selon une ou plusieurs des revendications précédentes, caractérisé en ce que la plaque de parement est composée de plusieurs plaques de plus petit format.

13. Elément composite selon la revendication 12, caractérisé en ce qu'au moins une des plaques de plus petit format est remplacée par une pièce de forme tridimensionnelle (72, 73, 74).

14. Elément composite selon une ou plusieurs des revendications précédentes, caractérisé en ce que, dans le collage des deux plaques (1 ; 21 ; 62 ; 81), (2 ; 22 ; 61 ; 71 ; 82, 83, 84), est noyé un tissu, tricot, tissus à mailles ou voile de fibres ou fils métalliques, de verre et/ou minéraux.

15. Elément composite selon une ou plusieurs des revendications précédentes, caractérisé en ce qu'on utilise comme adhésif (3, 24) une colle élastique.

16. Elément composite selon une ou plusieurs des revendications précédentes, caractérisé en ce qu'on utilise comme colle une colle formant résistance électrique.

17. Elément composite selon une ou plusieurs des revendications précédentes, caractérisé en ce que la plaque support et la plaque de parement (1 ; 21 ; 62 ; 81), (2 ; 22 ; 61 ; 71, 82, 83, 84) sont assemblées l'une à l'autre par un liant céramique.

18. Elément composite selon la revendication 17, caractérisé en ce que le liant céramique est un liant formant résistance électrique.

19. Elément composite selon une ou plusieurs des revendications précédentes, caractérisé en ce qu'on choisit comme matière pour la colle formant résistance électrique ou le liant formant résistance électrique une matière qui, lorsqu'elle est alimentée en courant électrique, présente un profil de température telle que la consommation de courant de la matière tende vers zéro lorsque la température s'élève.

20. Elément composite selon la revendication 19, caractérisé en ce que le liant formant résistance électrique ou la colle formant résistance électrique est réuni intimement à des éléments de connexion (91) servant à raccorder électriquement l'élément composite à un réseau d'alimentation par l'intermédiaire d'une matière qui, lorsqu'elle est alimentée en courant électrique, présente un profil de température tel que la consommation de courant de la matière tende vers zéro lorsque la température s'élève.

FIG.2

21

FIG.1

3
2
1

22

FIG.4

42

41

FIG.3

21    23

22    24

FIG.5

42

43    41

FIG.6

63

62

63    61

63

63

FIG.7

71    72

73

74

**FIG.8**

84 85    83 86    82 87

88

89

81

**FIG.9**

**FIG.10**

91

90

90